# EUROPÄISCHE PATENTANMELDUNG

(11) **EP 0 823 278 A2**
(43) Veröffentlichungstag der Anmeldung: **11.02.1998**
(21) Anmeldenummer: 97113498.6
(22) Anmeldetag: 05.08.1997
(51) Int. Cl.: B01D 53/04, B01J 8/12, B01D 15/00

(54) **Adsorbersystem**

(30) Priorität: 05.08.1996 DE 19631650
(71) Anmelder: Schmid, Christoph, D-53773 Hennef (DE)
(72) Erfinder: Schmid, Christoph, D-53773 Hennef (DE)
(74) Vertreter: Neumann, Ernst Dieter, Dipl.-Ing.

(57) **Zusammenfassung**

Ein Adsorbersystem zum Reinigen von Gasen und Flüssigkeiten oder zum Trocknen von Schüttgütern besteht aus den in vertikaler Anordnung von oben nach unten geschichteten und abgedichtet miteinander verbundenen Baugruppen
- Aufgabe- und Vorlageteil mit Abström- und Befüllbodensystem,
- Adsorptionsbett- oder Schüttgutsäulenteil und
- Entleerungsteil mit Austrags- und Anströmsystem.

Rohgas oder Trockengas bzw. Rohflüssigkeit durchläuft die Anordnung der Baugruppen von unten nach oben und das Adsorbens bzw. das Schüttgut diese Anordnung im Gegenstrom von oben nach unten.

## Beschreibung

Die Erfindung betrifft ein Adsorbersystem zum Reinigen von Gasen und Flüssigkeiten oder zum Trocknen von Schüttgütern, bestehend aus den in vertikaler Anordnung von oben nach unten geschichteten und abgedichtet miteinander verbundenen Baugruppen
- Aufgabe- und Vorlageteil mit Abström- und Befüllbodensystem,
- Adsorptionsbett- oder Schüttgutsäulenteil und
- Entleerungsteil mit Austrags- und Anströmsystem,
wobei das Rohgas oder Trockengas bzw. die Rohflüssigkeit die Anordnung der Baugruppen von unten nach oben und das Adsorbens bzw. das Schüttgut diese Anordnung im Gegenstrom von oben nach unten durchläuft.

Adsorber finden in zunehmendem Maße breite Anwendung in Industrie, Umweltschutztechnik und Haushalt. Der Grund dafür sind vor allem das gestiegene Umweltbewußtsein und die stetig steigenden Anforderungen an die Qualität von Produkten.

Bei der Adsorption handelt es sich in erster Linie um physikalische Adhäsion zwischen der Oberfläche des Adsorbens und dem Adsorbat, welches als dünner Film auf der Adsorbensoberfläche ausfällt. Hier findet kein chemischer Vorgang statt. Die Adsorption ist ein umkehrbarer und selektiver Vorgang. Solange der Kontakt zwischen Adsorbens und Adsorbat besteht, wird die Adsorption aufrechterhalten, bis der Dampfdruck des Adsorbates und des Adsorbens gleich sind. Findet keine Adsorption mehr statt, so ist das Gleichgewicht erreicht.

Die ersten Adsorber wurden gegen Ende des achtzehnten Jahrhunderts eingesetzt. Heute sind Adsorber aus der Abwasser- und Trinkwasserreinigung, der Gasreinigung und der Gastrocknung nicht mehr wegzudenken.

Aus dem DE-GM 89 03 669 ist ein Festbettadsorber bekannt, der aus einem Container besteht, in dem zur Begasung über einen äußeren Sammelkanal die Gase in mehrere innenliegende dreieckige gelochte Profilkanäle geleitet werden. Ein entscheidender Nachteil dieses Adsorbers ist es, daß die Gasverteilung über den gesamten Adsorptionsquerschnitt nicht optimal ist. Die gleichmäßige An- und Abströmung ist aber von größter Wichtigkeit bei der Adsorption - hängt doch von ihr nicht nur die Beladung des Adsorbers, sonder auch, vor allem bei der Gasreinigung, die Sicherheit des Adsorbers ab. In schlecht durchströmten Adsorptionszonen kommt es wegen der nicht abgeführten Adsorptionswärme sehr oft zu Bränden im Adsorber.

Für gehobene Ansprüche ist daher ein aufwendigerer GegenstromFließbettadsorber, wie er aus der DE-OS 42 20 493 bekannt ist, dem Festbettadsorber nicht nur wegen der einfacheren Bedienung und der Möglichkeit des kontinuierlichen Betriebs vorzuziehen.

Der Erfindung liegt die Aufgabe zugrunde, einen sicheren, bei einfachem Handling mit hohem Wirkungsgrad betreibbaren Adsorber zu schaffen, der sich bei einfacher Bauweise allen Erfordernissen des Betriebs leicht anpassen läßt.

Diese Aufgabe wird gemäß einem ersten Vorschlag dadurch gelöst, daß der eingangs erwähnte, aus Baugruppen gebildete Adsorber die folgenden weiteren Merkmale aufweist:
a) das Austrags- und Anströmsystem und das Abström- und Befüllbodensystem sind mit jeweils einem oberen und einem dazu im wesentlichen parallel angeordneten unteren Blechboden gebildet, wobei beide Blechböden miteinander fluchtende, im Raster angeordnete Durchbrüche aufweisen, die über den Abstand zwischen den beiden Blechböden überbrückende Schleusenrohre für den Durchtritt des Adsorbens bzw. des Schüttguts miteinander verbunden sind;
b) der obere Blechboden des Austrags- und Anströmsystems und der untere Blechboden des Abström- und Befüllbodensystems weisen zusätzlich zu den Durchbrüchen für die Schleusenrohre über ihre restliche Fläche verteilte kleine, dicht aneinanderliegende Lochungen auf, die den Durchtritt des Adsorbens bzw. des Schüttguts verhindern, den Gas- bzw. Flüssigkeitsdurchtritt von unten nach oben aber gestatten;
c) der obere Blechboden des Abström- und Befüllbodensystems weist im wesentlichen keine zu den Durchbrüchen zusätzliche Lochungen auf;
d) der untere Blechboden des Austrags- und Anströmsystems weist zusätzlich zu den Durchbrüchen über seine restliche Fläche verteilte dicht aneinanderliegende Lochungen auf, deren Größe so bemessen ist, daß sie den Durchtritt von Adsorbensstaub bzw. Schüttgutstaub gestatten.

Bei einem solchen Adsorber tritt das Rohgas oder die Flüssigkeit über einen Stutzen im Adsorbermantel in den Anströmraum des Austrags- und Anströmsystem ein. Am unteren Ende der Entleerung erfolgt der Anschluß für den Austrag des beladenen Adsorbens.

Das Austrags- und Anströmsystem und das Abström- und Befüllbodensystem bilden das Kernstück der Erfindung. Die Austrags- und Anströmböden sind so gestaltet, daß zwei Lochblechböden, die durch oben und unten offene Rohre verbunden sind, über den gesamten Querschnitt des Adsorbers einen ungehinderten Anströmraum bilden. Unterschiedlich große Lochungen - im oberen Blechboden sind die Löcher kleiner als im unteren - verhindern, daß aus dem Adsorptionsbett austretender Adsorbensstaub auf dem unteren Blechboden liegen bleibt und den Zugang zum Anströmraum verstopft. Im festgelegten Raster sind große Durchbrüche in den beiden Blechböden vorgesehen, in die den Abstand zwischen den Blechböden überbrückende Schleusenrohre eingeschweißt sind, durch die das Adsorbens von oben nach unten fließen kann.

Die Lochungen des oberen Lochblechbodens, die ebenso wie die Lochungen des unteren Lochblechbodens über den außerhalb der Durchbrüche für die Schleusenrohre liegenden Querschnitt des Lochblechbodens gleichmäßig verteilt sind, liegen dicht aneinander und sind so bemessen, daß sie den Durchtritt des Adsorbens verhindern, den Gas- und Flüssigkeitsdurchtritt von unten nach oben aber gestatten.

Der Querschnitt der Schleusenrohre kann, ebenso wie der daran angepaßte Querschnitt der Durchbrüche, rund, quadratisch, dreieckig, oval oder rechteckig sein oder noch andere Formen ausweisen.

Die Schleusenrohre können in ihrer Mantelfläche gelocht oder ungelocht sein.

Das Adsorbens fließt durch die Schleusenrohre gleichmäßig über den gesamten Querschnitt in einen Konus des Entleerungteils und von dort in einen Entsorgungsbehälter.

Durch schichtweises Ausschleusen von beladenem und unter den gegebenen Betriebsbedingungen nicht mehr aufnahmefähigem Adsorbens wird ein optimaler Wirkungsgrad des Adsorbens erreicht.

Das Adsorptionsbett wird aus dem Aufgabe- und Vorlageteil kontinuierlich mit unbeladenem Adsorbens nachgespeist.

In das Aufgaben- und Vorlageteil ist das Abström- und Befüllbodensystem integriert. Es ist so ausgebildet, daß zwei Blechböden - nur der untere davon ist ein Lochblech, der obere aber ungelocht - durch den Abstand zwischen ihnen überbrückende, am Rand von Durchbrüchen in den Blechböden befestigte, oben und unten offene Schleusenrohre miteinander verbunden sind. Über die Lochungen des unteren Blechbodens ist der gesamte Querschnitt des Abströmraums gut und im wesentlichen ungehindert anströmbar. Das ungelochte obere Blech verhindert Staubdurchtritt in einen Abströmraum.

Die Schleusenrohre können in die im festgelegten Raster angeordneten Durchbrüche in den Blechböden eingeschweißt sein. Durch die Schleusenrohre fließt das Adsorbens von oben aus dem Aufgabe- und Vorlageteil nach unten in das Adsorptionsbett. Die Lochungen des unteren Blechbodens sind aus über dessen gesamten Querschnitt verteilten, dicht aneinanderliegenden Löchern gebildet, die so bemessen sind, daß sie den Durchtritt des Adsorbens nach oben verhindern, den Gas- und Flüssigkeitsdurchtritt von unten nach oben jedoch gestatten.

Der Abströmraum wird nach oben durch den ungelochten Blechboden, nach unten durch den gelochten Blechboden und seitlich durch die Adsorberwand begrenzt. Das Gas oder die Flüssigkeit strömt aus dem Adsorptionsbett über den gesamten Adsorberquerschnitt durch den gelochten Blechboden in den Abströmraum und von dort in einen an der Außenwand des Adsorbers angebrachten Reingas- oder Reinflüssigkeitsstutzen.

Außerdem ist das Adsorbersystem nach den genannten Alternativen auch als Trockner für körnige oder staubförmige Schüttgüter geeignet. Der Verfahrensgang ist dann aber umgekehrt. Ein trokkenes Gas tritt über den Rohgaseintritt und weiter über das Austrags- und Anströmsystem (Austrags- und Begasungssystem) in die mit Feuchtigkeit beladene Schüttgutsäule (vorher Adsorptionsbett genannt) ein. Auf dem Weg durch das Schüttgut zum Abström- und Befüllbodensystem (Entgasungs- und Nachspeisesystem) wird das trockene Gas immer mehr befeuchtet und das Schüttgut dabei zugleich entfeuchtet. Dieser Vorgang bleibt solange aufrechterhalten, bis der Partialdruck von Gas und Schüttgut gleich ist.

Das befeuchtete Gas tritt am Reingasaustritt aus. Durch das Entgasungs- und Nachspeisesystem tritt im Gegenstrom die gleiche Menge feuchten Schüttguts nach, die als getrocknetes Schüttgut über das Austrags- und Begasungssystem in das Entleerungsteil eingeschleust wird.

Die oben genannte Aufgabe wird gemäß einem alternativen Vorschlag dadurch gelöst, daß der eingangs erwähnte, aus Baugruppen gebildete Adsorber die folgenden weiteren Merkmale aufweist:
a) das Austrags- und Anströmsystem (12) und das Abström- und Befüllbodenssystem (5) werden aus sich kreuzenden und miteinander verbundenen Kanälen (26) gebildet, die nach unten offen sind; die Kanäle (26) sind dabei rasterförmig über den gesamten Querschnitt des Adsorbers verteilt und werden seitlich durch die Adsorberwand (10) begrenzt;
b) die Anbindung eines Rohgas- oder Rohflüssigkeitsrohres (29) bzw. eines Reingas- oder Reinflüssigkeitsrohres (28) erfolgt beim Austrags- und Anströmsystem (12) zentral von unten und beim Abström- und Befüllbodensystem (5) zentral von oben, wobei diese Rohre (28, 29) weiter durch die Adsorberwand (10) aus dem Adsorber herausge führt werden.

Auch bei einem solchen Adsorber tritt das Rohgas oder die Flüssigkeit über einen Stutzen im Adsorbermantel in den Anströmraum des Austrags- und Anströmsystem ein. Am unteren Ende der Entleerung erfolgt der Anschluß für den Austrag des beladenen Adsorbens.

Die nach unten offenen Kanäle können durch Lochblechböden abgedeckt sein.

Auch hierbei bildet das Austrags- und Anströmsystem und das Abström- und Befüllsystem das Kernstück der Erfindung. Die im festgelegten Raster ausgebildeten Kanäle bilden unmittelbar das Anström- und das Abströmsystem. Die Kanäle können dreieckigen, runden, quadratischen, rechteeckigen oder ovalen Querschnitt aufweisen. Das Gas strömt von unten durch das Rohgas- oder Rohflüssigkeitsrohr in den Adsorber und verläßt diesen über das Reingas- oder Reinflüssigkeitsrohr, daß durch die Adsorberwand nach außen geführt ist.

Das Austrags- und Befüllbodensystem haben hierbei kein Bodenteil im eigenen Sinne, vielmehr werden diese nur durch das Raster der Kanäle gebildet, die den Querschnitt verringern und dadurch quasi Bodenteile bilden.

Gegebenenfalls können jedoch auch die Lochbleche, die die Kanäle nach unten abdecken können, sich über den gesamten Querschnitt des Adsorbers erstrecken.

Durch schichtweises Ausschleusen von beladenem und unter den gegebenen Betriebsbedingungen nicht mehr aufnahmefähigem Adsorbens wird ein optimaler Wirkungsgrad des Adsorbens erreicht.

Das Adsorptionsbett wird aus dem Aufgabe- und Vorlageteil kontinuierlich mit unbeladenem Adsorbens nachgespeist.

Zwei erfindungsgemäße Adsorbersysteme sind in den Figuren der Zeichnung in zum Teil geschnittener und perspektivischer Ansicht dargestellt.
- Figur 1: zeigt ein erfindungsgemäßes Adsorbersystem mit jeweils doppelten Zwischenböden und Schleusenrohren.
- Figur 2: zeigt ein erfindungsgemäßes Adsorbersystem mit zwei in einem Raster angeordnenten, nach unten offenen Kanalsystemen.

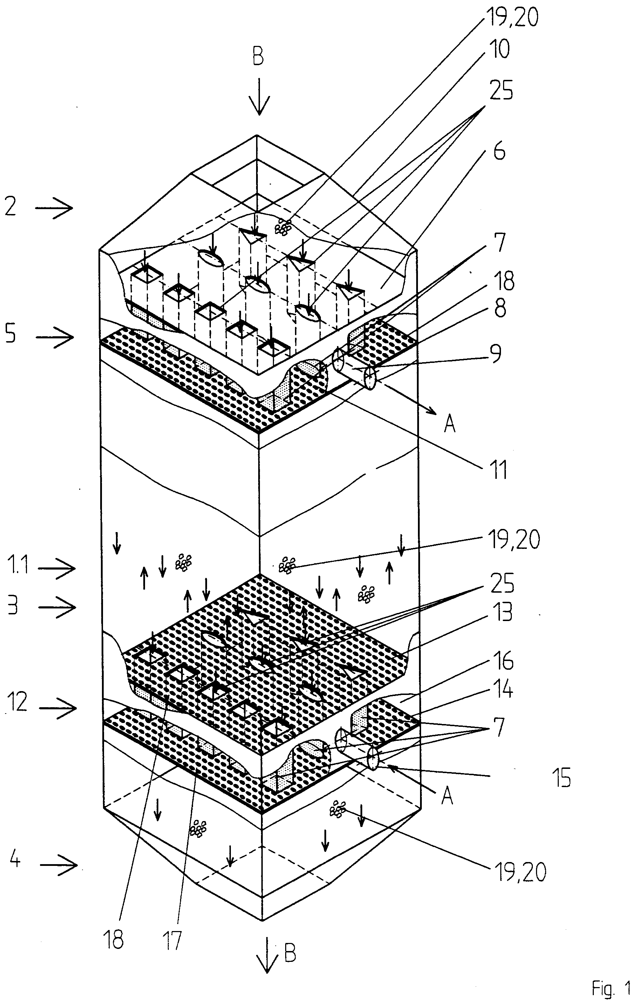

Das Adsorbersystem (1.1) nach Figur 1 besteht aus den Baugruppen Aufgabe- und Vorlageteil (2) mit Aufgabekonus sowie Abström- und Befüllbodensystem (5) , Adsorptionsbett oder Schüttgutsäulenteil (3) und Entleerungsteil (4) mit Austrags- und Anströmsystem (12) und Entleerkonus.

Das Abström- und Befüllbodensystem (5) umfaßt die Adsorberwand (10), einen oberen Blechboden (6), gelochte oder ungelochte Schleusenrohre (7), einen unteren Lochblechboden (8), einen Reingas- oder Reinflüssigkeitsstutzen (9) und einen Abströmraum (11).

Der Abströmraum (11) ist durch die Adsorberwand (10) dem oberen Blechboden (6) sowie dem unteren Lochblechboden (8) begrenzt und mündet in den Reingas- oder Reinflüssigkeitsstutzen (9).

Das Austrags- und Anströmsystem (12) umfaßt die Adsorberwand (10), einen oberen Lochblechboden (13), gelochte oder ungelochte Schleusenrohre (7), einen unteren Lochblechboden (14), einen Rohgas- oder Rohflüssigkeitsstutzen (15) und einen Anströmraum (16).

Der Anströmraum (16) ist durch die Adsorberwand (10), den oberen Lochblechboden (13) sowie den unteren Lochblechboden (14) begrenzt und mündet in den Rohgas- oder Rohflüssigkeitsstutzen (15).

Die einzelnen Baugruppen sind durch Verschweißen oder mittels Flanschen miteinander verbunden.

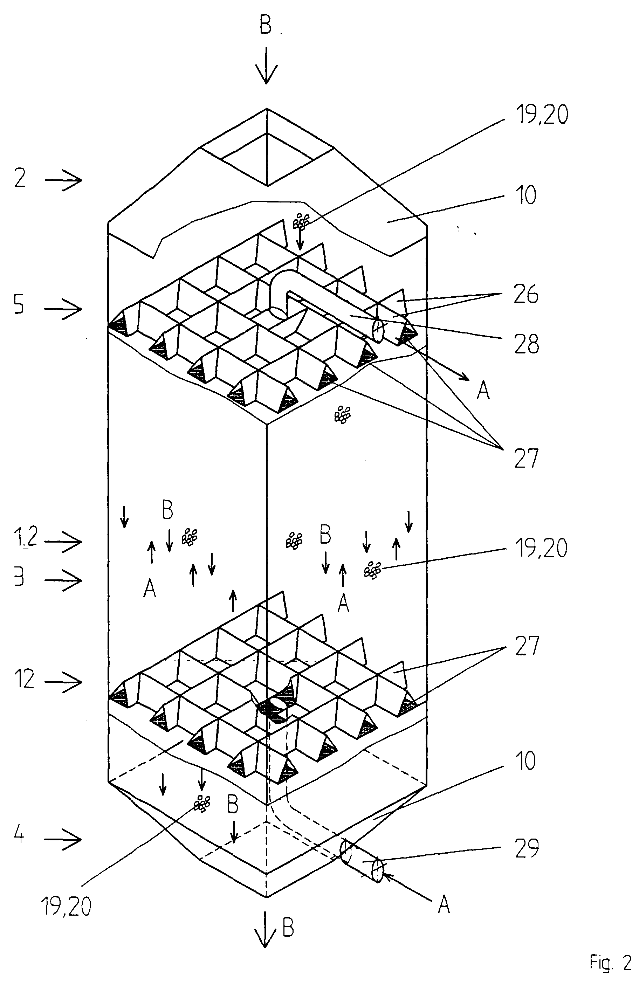

Das Adsorbersystem (1.2) nach Figur 2 besteht aus den Baugruppen Aufgabe- und Vorlageteil (2) mit Aufgabekonus sowie Abström- und Befüllbodensystem (5) , Adsorptionsbett oder Schüttgutsäulenteil (3) und Entleerungsteil (4) mit Austrags- und Anströmsystem (12) und Entleerkonus.

Das Abström- und Befüllbodensystem (5) umfaßt die Adsorberwand (10), ein Raster aus im Querschnitt dreieckigen Kanälen (26), die nach unten mit Lochblechen (27) abgedeckt sind und einen Reingas- und Reinflüssigkeitsstutzen (28), der an ein im Querschnitt rechteckiges Kanalstück ansetzt und durch die Adorberwand (10) nach außen geführt ist.

Der Abströmraum (11) ist durch die Adsorberwand (10) und das System der unten offenen, durch die Lochbleche (27) abgedeckten Kanäle begrenzt.

Das Austrags- und Anströmsystem (12) umfaßt die Adsorberwand (10), ein Raster aus im Querschnitt dreieckigen Kanälen (26), die nach unten mit Lochblechen (27) abgedeckt sind, und einen Rohgas- und Rohflüssigkeitsstutzen (29).

Der Anströmraum (16) ist durch die Adsorberwand (10) und das System der unten offenen, durch die Lochbleche (27) abgedeckten Kanäle begrenzt.

Die einzelnen Baugruppen sind durch Verschweißen oder mittels Flanschen miteinander verbunden.

### Bezugszeichenliste

- 1.: Adsorbersystem (1.1, 1.2)
- 2.: Aufgabe- und Vorlageteil
- 3.: Adsorptionsbett- oder Schüttgutsäulenteil
- 4.: Entleerkonus
- 5.: Abström- und Befüllbodensystem
- 6.: Blechboden (oberer, ungelocht)
- 7.: Schleusenrohr
- 8.: Blechboden (unterer, gelocht)
- 9.: Reingas- oder Reinflüssigkeitsstutzen
- 10.: Adsorberwand
- 11.: Abströmraum
- 12.: Austrags- und Anströmsystem
- 13.: Lochblechboden
- 14.: Blechboden (unterer, gelocht)
- 15.: Rohgas- oder Rohflüssigkeitsstutzen
- 16.: Anströmraum
- 17.: Lochung
- 18.: Lochung
- 19.: Adsorbens
- 20.: Schüttgut
- 25.: Durchbruch
- 26.: Kanal
- 27.: Lochblech
- 28.: Reingas- oder Reinflüssigkeitsstutzen
- 29.: Rohgas- oder Rohflüssigkeitsstutzen
- A: Gas, Flüssigkeit
- B: Adsorbens

## Patentansprüche

1. Adsorbersystem (1.1) zum Reinigen von Gasen und Flüssigkeiten oder zum Trocknen von Schüttgütern, bestehend aus den in vertikaler Anordnung von oben nach unten geschichteten und abgedichtet miteinander verbundenen Baugruppen
- Aufgabe- und Vorlageteil (2) mit Abström- und Befüllboden system (5),
- Adsorptionsbett- oder Schüttgutsäulenteil (3) und
- Entleerungsteil mit Austrags- und Anströmsystem (12),
wobei das Rohgas oder Trockengas bzw. die Rohflüssigkeit (23) die Anordnung der Baugruppen von unten nach oben und das Adsorbens (19) bzw. das Schüttgut (20) diese Anordnung im Gegenstrom von oben nach unten durchläuft, mit den weiteren Merkmalen:
a) Das Austrags- und Anströmsystem (12) und das Abström- und Befüllbodensystem (5) sind mit jeweils einem oberen (6, 13) und einem dazu im wesentlichen parallel angeordneten unteren Blechboden (8, 14) gebildet, wobei beide Blechböden miteinander fluchtende, im Raster angeordnete Durchbrüche (25) aufweisen, die über den Abstand zwischen den beiden Blechböden überbrückende Schleusenrohre (7) für den Durchtritt des Adsorbens (19) bzw. des Schüttguts (20) miteinander verbunden sind;
b) der obere Blechboden (13) des Austrags- und Anströmsystems (12) und der untere Blechboden (8) des Abström- und Befüllbodensystems (5) weisen zusätzlich zu den Durchbrüchen (25) für die Schleusenrohre (7) über ihre restliche Fläche verteilte kleine, dicht aneinanderliegende Lochungen (18) auf, die den Durchtritt des Adsorbens (19) bzw. des Schüttguts (20) verhindern, den Gas- bzw. Flüssigkeitsdurchtritt von unten nach oben aber gestatten;
c) der obere Blechboden (6) des Abström- und Befüllbodensystems (5) weist im wesentlichen keine zu den Durchbrüchen (25) zusätzliche Lochungen auf;
d) der untere Blechboden (14) des Austrags- und Anströmsystems (12) weist zusätzlich zu den Durchbrüchen (25) über seine restliche Fläche verteilte dicht aneinanderliegende Lochungen (17) auf, deren Größe so bemessen ist, daß sie den Durchtritt von Adsorbensstaub bzw. Schüttgutstaub gestatten.

2. Adsorbersystem nach Anspruch 1, bei dem die Lochungen (18) des oberen Blechbodens (13) des Austrags- und Anströmsystems (12) kleiner ausgebildet sind als die Lochungen (17) des unteren Blechbodens (14) des Austrags- und Anströmsystems (12).

3. Adsorbersystem nach Anspruch 1 oder 2, bei dem alle Blechböden (6, 8, 13, 14) im wesentlichen ebenflächig sind.

4. Adsorbersystem nach einem oder mehreren der vorhergehenden Ansprüche, bei dem die Durchbrüche (25) in Größe und Form dem runden, ovalen, quadratischen, rechteck- oder dreieckförmigen Querschnitt der Schleusenrohre (7) entsprechen.

5. Adsorbersystem nach einem oder mehreren der vorhergehenden Ansprüche, bei dem die Verbindungen zwischen den abgedichtet miteinander verbundenen Baugruppen Flanschverbindungen oder Verschweißungen sind.

6. Adsorbersystem nach einem oder mehreren der vorhergehenden Ansprüche, bei dem die Schleusenrohre (7) gelocht sind.

7. Adsorbersystem (1.2) zum Reinigen von Gasen und Flüssigkeiten oder zum Trocknen von Schüttgütern, bestehen aus den in vertikaler Anordnung von oben nach unten geschichteten und abgedichtet miteinander verbundenen Baugruppen
- Aufgabe- und Vorlageteil (2) mit Abström- und Befüllboden system (5),
- Adsorptionsbett- oder Schüttgutsäulenteil (3) und
- Entleerungsteil mit Austrags- und Anströmsystem (12),
wobei das Rohgas oder Trockengas bzw. die Rohflüssigkeit (23) die Anordnung der Baugruppen von unten nach oben und das Adsorbens (19) bzw. das Schüttgut (20) diese Anordnung im Gegenstrom von oben nach unten durchläuft, mit den weiteren Merkmalen:
a) das Austrags- und Anströmsystem (12) und das Abström- und Befüllbodensystem (5) werden aus sich kreuzenden und miteinander verbundenen Kanälen gebildet, die nach unten offen sind; die Kanäle (26) sind dabei rasterförmig über den gesamten Adsorberquerschnitt verteilt und werden seitlich durch die Adsorberwand (10) begrenzt;
b) die Anbindung eines Rohgas- oder Flüssigkeitsrohres (29) bzw. eines Reingas- oder Reinflüssigkeitsrohres (28) erfolgt beim Austrags- und Anströmsystem (12) zentral von unten und beim Abström- und Befüllbodensystem (5) zentral von oben, wobei sie weiter durch die Adsorberwand (10) ins Freie geführt werden.

8. Adsorbersystem nach Anspruch 7,
wobei die nach unten offenen Kanäle (26) durch Lochblechböden (27) abgedeckt sind.

9. Adsorbersystem nach Anspruch 7 oder 8,
wobei die Kanäle (26) dreieckige, rechteckige, quadratische, runde oder ovale Querschnitte aufweisen.

10. Adsorbersystem bei dem mehrere aus den Baugruppen
- Aufgabe- und Vorlageteil (2) mit Abström- und Befüllboden system (5),
- Adsorptionsbett- oder Schüttgutsäulenteil (3) und
- Entleerungsteil mit Austrags- und Anströmsystem (12)
gebildete Einheiten nach einem oder mehreren der vorhergehenden Ansprüche nebeneinander angeordnet einen Adsorber bilden.
